(19) Europäisches Patentamt
European Patent Office
Office européen des brevets

(11) **EP 4 465 088 A1**

(12) **EUROPEAN PATENT APPLICATION**

(43) Date of publication:
**20.11.2024 Bulletin 2024/47**

(21) Application number: **23173721.4**

(22) Date of filing: **16.05.2023**

(51) International Patent Classification (IPC):
**G01S 13/84** (2006.01)　　　　**H04W 4/80** (2018.01)
**H04W 4/02** (2018.01)

(52) Cooperative Patent Classification (CPC):
**G01S 13/84; H04W 4/023; H04W 4/027;
H04W 4/80**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Stichting IMEC Nederland
5656 AE Eindhoven (NL)**

(72) Inventors:
- **Farsaei, Amirashkan
  2641 BW Pijnacker (NL)**
- **Sheikh, Alireza
  5629 KH Eindhoven (NL)**
- **Romme, Jac
  3118 Schiedam (NL)**

(74) Representative: **AWA Sweden AB
Box 5117
200 71 Malmö (SE)**

(54) **PHASED-BASED RANGING**

(57)　A method (1000) of phase-based ranging between a first device (110) and a second device (120), comprises receiving (1010) a plurality two-way phase-measurements between the first device (110) and the second device (120) performed at a plurality of frequencies; identifying (1020) a first measurement and a second measurement of said plurality of two-way phase measurements, said first measurement and said second measurement having been performed at a same frequency; calculating (1030) a relative speed between said first device (110) and said second device (120) based at least on said first measurement and said second measurement; doppler compensating (1040) a plurality of measurements of said plurality of two-way phase measurements based on the calculated relative speed; and calculating (1050) a distance between said first device (110) and said second device (120) based on the doppler compensated measurements.

Fig. 1

Processed by Luminess, 75001 PARIS (FR)

**Description**

Technical field

The present inventive concept relates to a method of phase-based ranging between a first device and a second device. Further, it relates to a device configured to perform the method, and to a non-transitory computer-readable medium comprising instructions which, when executed by a computer or processor, causes the computer or processor to carry out the method.

Background

Methods of phase-based ranging are known in the prior art, wherein a range, i.e., a distance, between a first device and a second device may be determined based on two-way phase measurements between the first device and the second device at a plurality of frequencies, the frequencies conventionally referred to in the field as "tones".

Conventionally, a linear frequency sweep may be used for making the plurality of two-way phase measurements at the plurality of frequencies.

Typically, fast Fourier transform (FFT)-based algorithm and/or socalled super-resolution algorithms may be used to estimate the range based on the plurality of two-way phase measurement measurements.

In the presence of Doppler shift, e.g., during movement of one or both of the devices, the range estimate will be biased. Such a bias may be removed using the method proposed in US11184048B2. However, that method depends on the employing of a linear frequency sweep and is thus not usable in the case of pseudo-random channel hopping, e.g., as mandated by US FCC regulation 47 CFR §15.247.

Summary

In view of the above, an objective of the present inventive concept is to provide a Doppler-compensated phase-based ranging method employable in the case of pseudo-random channel hopping.

According to an aspect of the present inventive concept, there is provided a method of phase-based ranging between a first device and a second device, comprising receiving a plurality two-way phase-measurements between the first device and the second device performed at a plurality of frequencies; identifying a first measurement and a second measurement of said plurality of two-way phase measurements, said first measurement and said second measurement having been performed at a same frequency; calculating a relative speed between said first device and said second device based at least on said first measurement and said second measurement; doppler-compensating a plurality of measurements of said plurality of two-way phase measurements based on the calculated relative speed; and calculating a distance between said first device and said second device based on the doppler-compensated measurements.

The present inventive concept allows for doppler-compensated phase-based ranging to occur even in the case of the two-way phase measurements not following a linear frequency sweep, for example in the case of pseudo-random channel hopping, thus allowing for accurate phase-based ranging while allowing for regulatory compliance with regard to, e.g., pseudo-random channel hopping.

Each two-way phase measurement of said plurality of two-way phase measurements may be a pair of in-phase, I, and quadrature, Q, measurements; a phase-magnitude-pair; or any other pair of numbers representable as a complex number. This may be a convenient way of carrying out and/or representing the two-way phase measurements.

The frequencies of said plurality of two-way phase measurements may be pseudo-randomly ordered in time. This may be a typical government regulation and/or standards requirement where the present inventive concept may be particularly advantageous.

For example, the pseudo-random order in time of the frequencies of said plurality of two-way phase measurements may be according to US FCC regulation 47 CFR §15.247.

The calculating of said distance may be performed using a fast Fourier transform, FFT, ranging algorithm, or a superresolution ranging algorithm. These are particularly beneficial applications of the present inventive concept.

Said relative speed may calculated based on a phase difference between said second measurement and said first measurement, said same frequency, and a time difference between said second measurement and said first measurement. This is a particularly simple way of carrying out the invention.

Said relative speed may be calculable as:

$$\hat{v} = \frac{c\Delta\phi}{-4\pi f_v \Delta T}$$

wherein $\hat{v}$ is the estimated relative speed, c is the speed of light, $f_v$ is said same frequency, $\Delta T$ is a time difference between said second measurement and said first measurement, and $\Delta \phi$ is a phase difference between said second measurement and said first measurement.

A doppler compensation of said doppler-compensating may be calculated based on the frequency of the measurement, the estimated relative speed, the time of measurement at the first device and the time of measurement at the second device. This is a particularly simple way of carrying out the invention.

In particular, a doppler compensation of said compensating may be calculable as:

$$\hat{\phi}_{doppler} = -2\pi f \frac{\hat{v}}{c}(t_A + t_B)$$

wherein $f$ is the frequency of the measurement, $\hat{v}$ is the estimated relative speed, c is the speed of light, $t_A$ is a time of measurement at the first device and $t_B$ is a time of measurement at the second device.

According to another aspect, there is provided a device configured to perform the method. This aspect may generally present the same or corresponding advantages as the former aspect.

According to another aspect, there is provided a non-transitory computer-readable medium comprising instructions which, when executed by a computer or processor, causes the computer or processor to carry out the method. This aspect may generally present the same or corresponding advantages as the former aspects.

Brief description of the drawings

The above, as well as additional objects, features, and advantages of the present inventive concept, will be better understood through the following illustrative and non-limiting detailed description, with reference to the appended drawings. In the drawings like reference numerals will be used for like elements unless stated otherwise.

Fig. 1 shows a system comprising a first device and a second device.
Fig. 2 shows a method example of phase-based ranging.

Detailed description

The present disclosure relates to phase-based ranging. For example, it may apply to Bluetooth Low Energy (BLE) devices, where, for example, High Accuracy Distance Measurements (HADM) and/or, Channel Sounding (CS), may allow for measuring the distance between two BLE devices phase-based ranging.

Phase-based ranging may be preferred in multi-path channels as it is known to be resilient against multi-path interference.

To compute the distance between the two devices, such as two BLE devices, using phase-based ranging, the devices may perform two-way phase measurements at a plurality of tones.

When a device is moving during the measurement procedure, the radio channel changes due to the Doppler effect, which degrades the computed distance as the Doppler adds phase-shift to, e.g., the measured IQ samples.

The phase shift added by the Doppler effect is a function of the displacement of the moving device. The error sensitivity of the distance estimation due to Doppler depends on the duration of the channel sounding procedure, which is a function of tones, step duration, etc.

Phase-based ranging, for example as implemented in BLE CS and/or HADM, may allow measuring the distance between two devices. One device may initiate the process (initiator) and a second device to reciprocate transmission (reflector). To measure the distance, for example with BLE CS, the initiator and reflector may support Multi-Carrier Phase Difference (MCPD), where the narrow-band radios of the initiator and reflector exchange tones, e.g., over the 2.4 GHz ISM band.

For each carrier, i.e., each frequency, two phase measurements may be conducted in two consecutive measurement periods. During the first period, the initiator may send an unmodulated carrier RF signal, i.e., its LO signal to the reflector and the reflector performs a phase measurement. During the second period, the reflector sends an unmodulated carrier RF signal, i.e., its LO to the initiator, and the initiator performs a phase measurement.

This procedure is also known as two-way ranging (2WR) as both sides require to exchange tones. By processing the phase measurements, the range between two devices may be computed. Note that equivalently, an IQ measurement can be done, instead of a phase measurement.

Such techniques in the prior art may generally perform poorly in multi-path channels, e.g., because of not using super-resolution algorithms.

Besides, these techniques may not be FCC 15.247 compliant. To comply with FCC 15.247, the following requirements must be met: "The system shall hop to channel frequencies that are selected at the system hopping rate from a pseudo-randomly ordered list of hopping frequencies. Each frequency must be used equally on the average by each transmitter".

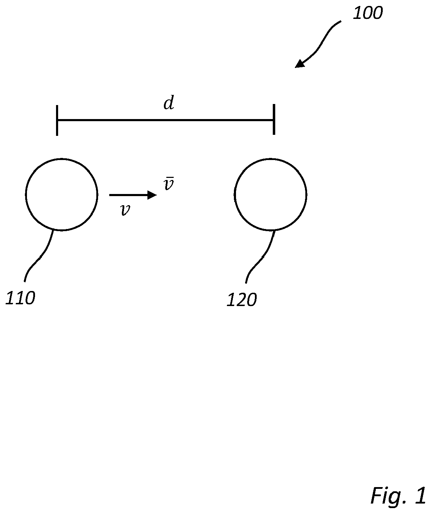

Fig. 1 shows a system 100 comprising a first device 110 and a second device 120. For example, the first device 110 and the second device 120 may be Bluetooth Low Energy (BLE) devices, as known in the art.

For simplicity, the present disclosure is presented in relation to a system comprising two devices. However, as the skilled person would readily understand, the present inventive concept would be equally applicable to a system comprising any plurality of devices.

The first device 110 may move with respect to the second device 120. For example, the first device 110 may be moving with respect to the local environment, while the second device 120 may be stationary. In other words, the first device 110 may be a mobile device and the second device 120 may be a stationary device.

In another example, both the first device 110 and the second device 120 may be moving with respect to the environment.

Further, as an example, the location of the second device 120 may be known, and the location of the first device 110 may be unknown.

As shown in Fig. 1, the first device 110 may be moving with a velocity vector $\bar{v}$ with respect to the second device 120. The velocity vector $\bar{v}$ may have a component v parallel to the line of sight between the first device 110 and the second device 120, i.e., the component v representing the relative speed between the first device 110 and the second device 120.

In the case of movement parallel to the line of sight between the first device 110 and the second device 120, the component v is the speed of the first device 110 with respect to the second device 120. Then, the distance d between the first device 110 and the second device 120, as a function of time, is

$$d(t) = d_0 + v\,t$$

where $d_0$ it the distance between the first device 110 and the second device 120 at time t=0.

Further, the propagation delay for a signal traveling between the first device 110 and the second device 120 is

$$\tau(t) = d(t)/c = d_0/c + (v \cdot t)/c = \tau_0 + (v \cdot t)/c,$$

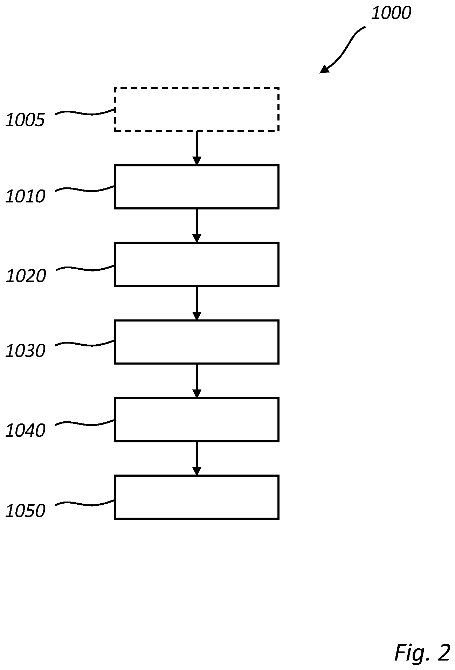

Fig. 2 illustrates a method example 1000 of phase-based ranging involving doppler compensation. The phase-based ranging may, for example, be performed between the first device 110 of Fig. 1 and the second device 120 of Fig. 1.

The method example 1000 may be particularly useful for BLE devices.

Further, the method example 1000 may be particularly useful in the case of two-way phase measurement using pseudo-random frequency hopping.

The ranging may involve determining a distance $_d$ between the first device 110 and the second device 120.

The method example 100 may be computer implemented. For example, there may be provided a non-transitory computer-readable medium comprising instructions which, when executed by a computer or processor, as generally known in the art, causes the computer or processor to carry out the method example.

At 1005, a plurality two-way phase-measurements between the first device and the second device may be performed at a plurality of frequencies, as generally known in the art.

Typically, the frequencies of the plurality of two-way phase measurements may be pseudo-randomly ordered in time, for example according to US FCC regulation 47 CFR §15.247, as known in the art.

The first device 110 and the second device 120, may each generate a same pseudo-randomly ordered list $\mathcal{A}$ ref of frequencies, representing the plurality of frequencies at which the two-way phase measurements are to be performed. For example, by sharing a random seed, such as represented by a key, between the devices, both the first device 110 and the second device 120 devices can generate the same pseudo-randomly ordered list $\mathcal{A}$ ref of frequencies.

As the skilled person would be able to arrange, the pseudo-randomly ordered list of frequencies $\mathcal{A}$ ref may be generated such that at least one frequency occurs in the pseudo-randomly ordered list of frequencies $\mathcal{A}$ ref at least twice.

In other words, the pseudo-randomly ordered list of frequencies $\mathcal{A}$ ref may be arranged so that it may be divided into two non-empty sets: a set of channels that construct a linear ramp denoted by $\mathcal{A}$ ramp, and a set of remaining channels denoted by $\mathcal{A}$ other. $\mathcal{A}$ other is the set of channels which are added to the set $\mathcal{A}$ ref and it is ensured that frequency channels are used in a pseudo-random order as e.g., required by regulatory bodies like FCC, for example according to the aforementioned US FCC regulation 47 CFR §15.247.

For example, the obtained linear ramp $\mathcal{A}$ ramp may (in frequency order) have a starting frequency $f_0$ with frequency steps of $\Delta f$. Thus, for a linear ramp with $K_f$ frequencies, the kth frequency denoted by $f_k$ may be found by

$$f_k = f_0 + k\Delta f, \qquad \forall k \in \{0,1,...,K_{f-1}\}.$$

Further, the first device 110 and the second device 120 may agree on other requirements known to the skilled person, for example according to a relevant standard, such as BLE, e.g., which device starts the tone exchange, when the devices switch roles, how many tones will be exchanged, etc., as generally known in the art for two-way phase-based ranging.

For example, the first device 110 and the second device 120 may agree to switch frequencies at the same time ($t_{k,\text{switch}}$). A step duration $T_f$ may include the time reserved for both frequency switching and phase measurement in a half-duplex mode.

The first device 110 and the second device 120 may exchange tones according to the list $\mathcal{A}$ ref and conduct at each tone a two-way phase measurement, the measurements thus obtained comprising the plurality of two-way phase measurements.

Each two-way phase measurement of the plurality of two-way phase measurements may, for example, be a pair of an in-phase, $I$, and a quadrature, $Q$, measurement; a phase-magnitude-pair; or any other pair of numbers representable as a complex number, as generally known in the art. A pair comprising an in-phase $I$ measurement and a quadrature $Q$ measurement may collectively be referred to as an $IQ$ sample.

During exchange of an $m_{th}$ tone according to the list $\mathcal{A}$ ref, the measured $IQ$ sample at the first device 110 at time $t_{m,A}$ may be denoted by $y_{BA}(tm,A)$, whereas the measured $IQ$ sample at the second device 120 at time $t_{m,B}$ may be denoted by $y_{AB}(t_{m,B})$.

The first device 110 and the second device 120 may agree that during exchange of each tone, first the second device 120 is in a transmit (TX) mode, and the first device 110 is in a receive (RX) mode, where the first device performs a phase measurement, e.g., in the form of an $IQ$ sample. Then, the first device 110 and the second device 120 may switch roles, i.e., so that the first device 110 is in the transmit mode and the second device 120 is in the receive mode, where the second device 120 performs a further phase measurement, e.g., in the form of an $IQ$ sample.

At 1010, the plurality of two-way phase measurements may be received at a device performing one or more of the following steps of the method example 1000. For example, the device performing the method example 1000 may be one of the first device 110 or the second device 120, or a different, third device. The term receiving should be understood as the plurality of two-way phase measurements either being transmitted to the device, or already being available at the device, in whole or part.

Further, the device performing the method example may receive the pseudo-randomly ordered list of frequencies $\mathcal{A}$ ref, for example as decomposed into $\mathcal{A}$ ramp and $\mathcal{A}$ other.

At 1020, a first measurement and a second measurement of the plurality of two-way phase measurements having been performed at a same frequency are identified.

The identification may, for example, be done based on the pseudo-randomly ordered list $\mathcal{A}$ ref, for example as decomposed into $\mathcal{A}$ ramp and $\mathcal{A}$ other.

The first measurement and the second measurement, having a same frequency $f_v$, may be identified so that one of the first measurement and the second measurement may be part of $\mathcal{A}$ ramp and the other of the first measurement and the second measurement may be part of $\mathcal{A}$ other.

At 1030, a relative speed between the first device 110 and the second device 120 is calculated based at least on the first measurement and the second measurement identified at 1020. The relative speed may correspond to a relative speed parallel to the line of sight between the first device 110 and the second device 120.

The relative speed may be calculated as:

$$\hat{v} = \frac{c\Delta\phi}{-4\pi f_v \Delta T}$$

wherein $\hat{v}$ is the estimated relative speed, c is the speed of light, $f_v$ is the said same frequency, $\Delta T$ is a time difference between the second measurement and the first measurement, and $\Delta\phi$ is a phase difference between the second measurement and the first measurement.

Thus, the relative speed may be calculated based on a phase difference between said second measurement and said first measurement, said same frequency, and a time difference between said second measurement and said first measurement.

Explained in more detail, still at 1020, two tones in $\mathcal{A}$ ramp and $\mathcal{A}$ other with the same frequency may be found: Given a tone from $\mathcal{A}$ ramp with frequency $f_m$, suppose there is a tone among $\mathcal{A}$ other with the same frequency $f_m$.

Denote the two-way phase measurement in $\mathcal{A}$ ramp and $\mathcal{A}$ other with

$$\phi_{2W}[m] = \mathrm{angle}\big(\mathrm{IQ}_{2W,t_m}\big)$$

and

$$\phi_{2W}[n] = \mathrm{angle}\big(\mathrm{IQ}_{2W,t_n}\big),$$

respectively, where

$$\mathrm{IQ}_{2W,t_m} = y_{AB}\big(t_{m,B}\big) \times \; y_{BA}\big(t_{m,A}\big)$$

Thus, the tone from $\mathcal{A}$ ramp may correspond to the measurements of the mth tone, whereas the tone in $\mathcal{A}$ other corresponds to the measurements of the $n$th tone, both with the same frequency of $f_m$.

The two-way phase sample for mth tone may be found by

$$\Delta\phi_{2W}[m, n] = \phi_{2W}[m] - \phi_{2W}[n]$$

$$= -2\pi f_m \left( 2\tau + \frac{v}{c}\big(t_{m,A} + t_{m,B}\big) \right) + 2\pi f_m \left( 2\tau + \frac{v}{c}\big(t_{n,A} + t_{n,B}\big) \right)$$

$$= -2\pi f_m \left( \frac{v}{c}\big(t_{m,A} + t_{m,B} - t_{n,A} - t_{n,B}\big) \right) = -4\pi f_m \frac{v}{c}(m - n)T_f$$

Thus, the velocity estimate may then computed as follows

$$v[m, n] = \frac{c}{-4\pi f_m(m - n)T_f}\Delta\phi_{2W}[m, n].$$

where $T_f$ is the step duration, $f_m$ is the frequency of tone m, where $f_m = f_n$ and c is the speed of the light. Note that $m$ and $n$ are also indicate at what time-interval the respective tones have been exchanged.

Optionally, a plurality of relative speed estimates may be computed at a plurality of different frequencies, each according to the above.

For example, $_L$ relative speed estimates

$$\{\hat{v}_1, \hat{v}_2, \hat{v}_3, \ldots, \hat{v}_L\}$$

corresponding to tones in $\mathcal{A}$ ramp and $\mathcal{A}$ other, each with same frequencies having indices

$$\{(m_1, n_1), (m_2, n_2), \ldots, (m_L, n_L)\}, \text{ where } f_{m_i} = f_{n_i}, i = 1, 2, \ldots, L$$

may be computed.

Given this plurality of relative speed estimates, a final relative speed estimate may be calculated as a weighted average of the plurality of relative speed estimates:

$$\hat{v} = \frac{\sum_l \hat{v}_l w_l}{\sum_l w_l},$$

In a simple case, the weights $w_l$ may all be set to 1.

In a more refined case, the weights $w_l$ may be computed as

$$w_l = f_{m_l}^2 (m_l - n_l)^2.$$

Thus, the weighted average may be computed with weights being proportional to the square of the time between the first measurement and the second measurement. Hereby, the weights $w_l$ correspond to the inverse of the variance of the noise of each relative speed estimate $\hat{v}_l$, under an assumption of a noise term comprising additive white gaussian noise being independent and identically-distributed random variables. This may improve accuracy of the final relative speed estimate.

Alternatively, or additionally, measurements may be excluded from the weighted average, which may further improve accuracy of the final relative speed estimate.

For example, in the absence of interference and other noise sources, it is expected that the absolute of the two-way *IQ* samples to be constant during the tone exchange. Denote the absolute of two-way *IQ* samples at time $t_m$ by

$$\text{abs}\left(\text{IQ}_{2W,t_m}\right) = \text{abs}\left(y_{AB}\left(t_{m,B}\right) \times y_{BA}\left(t_{m,A}\right)\right)$$

IQ samples may be excluded from the weighted average if $\text{abs}(\text{IQ}_{2w,tm})$ is considerably lower than average.

In particular, an *IQ* sample may be excluded from the weighted average if

$$\frac{\text{abs}\left(\text{IQ}_{2W,t_m}\right)}{\frac{1}{M}\sum_l \text{abs}\left(\text{IQ}_{2W,t_l}\right)} \leq \delta$$

where M is the total number of exchanged tones between the first device 110 and the second device 120 two devices and $\delta$ is a threshold, e.g., 0.75. As practicable by the skilled person, the threshold $\delta$ can be optimized based on the system parameters, e.g., the number of exchanged tones, *Tf*, etc.

At 1040, a plurality of measurements of said plurality of two-way phase measurements is doppler compensated based on the relative speed calculated at 1040. The doppler compensation may be calculated based on the frequency of the measurement, the estimated relative speed, the time of measurement at the first device and the time of measurement at the second device.

In particular, the doppler compensation may be calculated as:

$$\hat{\phi}_{doppler} = -2\pi f \frac{\hat{v}}{c}(t_A + t_B)$$

wherein *f* is the frequency of the measurement, $\hat{v} = v[m,n]$ is the estimated relative speed at 1040, c is the speed of light, $t_A$ is a time of measurement at the first device and $t_B$ is a time of measurement at the second device.

The doppler compensation thus calculated may then be additively applied to the plurality of measurements, for compensating for doppler shift between the first device 110 and the second device 120.

The above may be understood from the fact that the two-way phase measurement

$$\phi_{2W}[m] = \text{angle}\left(y_{AB}\left(t_{m,B}\right) \times y_{BA}\left(t_{m,A}\right)\right) = -2\pi f_m \left(2\tau + \frac{v}{c}\left(t_{m,A} + t_{m,B}\right)\right),$$

it can be seen that the Doppler effect appears as a phase shift

$$\phi_{\text{Doppler}}[m] = -2\pi f_m \frac{v}{c} \left( t_{m,A} + t_{m,B} \right)$$

in the two-way phase measurement. Through the use of the estimated relative speed $\hat{v}$, this doppler shift may be compensated for.

In particular, in the case of a two-way phase measurement being representable as a complex number, compensation may be applied by multiplication with a factor

$$\exp\left( -j\hat{\phi}_{\text{Doppler}}[m] \right),$$

obtaining a compensated two-way phase measurement

$$\phi_{2W,\text{Comp.}}[m] = \text{angle}\left( y_{AB}(t_{m,B}) \times y_{BA}(t_{m,A}) \times \exp\left( j2\pi f_m \frac{\hat{v}}{c}\left( t_{m,A} + t_{m,B} \right) \right) \right).$$

At 1050, a distance is calculated between said first device and said second device based on the doppler compensated measurements.

The distance may be calculated using methods generally known in the art of phase-based ranging, such as using a fast Fourier transform, FFT, ranging algorithm or a superresolution ranging algorithm, e.g., MUSIC.

In the above the inventive concept has mainly been described with reference to a limited number of examples. However, as is readily appreciated by a person skilled in the art, other examples than the ones disclosed above are equally possible within the scope of the inventive concept, as defined by the appended claims.

**Claims**

1.    A method (1000) of phase-based ranging between a first device (110) and a second device (120), comprising:

Receiving (1010) a plurality two-way phase-measurements between the first device (110) and the second device (120) performed at a plurality of frequencies;

identifying (1020) a first measurement and a second measurement of said plurality of two-way phase measurements having been performed at a same frequency;

calculating (1030) a relative speed between said first device (110) and said second device (120) based at least on said first measurement and said second measurement;

doppler compensating (1040) a plurality of measurements of said plurality of two-way phase measurements based on the calculated relative speed; and

calculating (1050) a distance between said first device (110) and said second device (120) based on the doppler compensated measurements.

2.    The method (1000) of claim 1, wherein each two-way phase measurement of said plurality of two-way phase measurements is a pair of in-phase, I, and quadrature, Q, measurements, a phase-magnitude-pair, or any other pair of numbers representable as a complex number.

3.    The method (1000) of any one wherein the frequencies of said plurality of two-way phase measurements are pseudo-randomly ordered in time.

4.    The method (1000) of claim 3, wherein the pseudo-random order in time of the frequencies of said plurality of two-way phase measurements is according to US FCC regulation 47 CFR §15.247.

5.    The method (1000) of any one of claims 1-4, wherein said calculating (1030) of said distance is performed using an fast Fourier transform, FFT, ranging algorithm or a superresolution ranging algorithm.

6.    The method (1000) of any one of claims 1-5, wherein said relative speed is calculated based on a phase difference between said second measurement and said first measurement, said same frequency, and a time difference between said second measurement and said first measurement

7. The method (1000) of any one of claims 1-5, wherein said relative speed is calculable as:

$$\hat{v} = \frac{c\Delta\phi}{-4\pi f_v \Delta T}$$

wherein $\hat{v}$ is the estimated relative speed, c is the speed of light, $f_v$ is said same frequency, $\Delta T$ is a time difference between said second measurement and said first measurement, and $\Delta\phi$ is a phase difference between said second measurement and said first measurement.

8. The method (1000) of any one of claims 1-7, wherein a doppler compensation of said doppler compensating is calculated based on the frequency of the measurement, the estimated relative speed, the time of measurement at the first device and the time of measurement at the second device.

9. The method (1000) of any one of claims 1-7, wherein a doppler compensation of said doppler compensating is calculable as:

$$\hat{\phi}_{doppler} = -2\pi f \frac{\hat{v}}{c}(t_A + t_B)$$

wherein $f$ is the frequency of the measurement, $\hat{v}$ is the estimated relative speed, c is the speed of light, $t_A$ is a time of measurement at the first device and $t_B$ is a time of measurement at the second device.

10. A device configured to perform the method of any one of claims 1-9.

11. A non-transitory computer-readable medium comprising instructions which, when executed by a computer or processor, causes the computer or processor to carry out the method of any one of claims 1-9.

Fig. 1

1000

1005

1010

1020

1030

1040

1050

*Fig. 2*

Europäisches
Patentamt

European
Patent Office

Office européen
des brevets

## EUROPEAN SEARCH REPORT

Application Number

EP 23 17 3721

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 11 184 048 B2 (STICHTING IMEC NEDERLAND [NL]) 23 November 2021 (2021-11-23) * abstract * * column 1, line 43 – column 4, line 12 * * column 5, line 32 – column 15, line 26; figures 1-6 * | 1-8,10, 11 | INV. G01S13/84 H04W4/80 H04W4/02 |
| A | US 2022/066019 A1 (WAHEED KHURRAM [US] ET AL) 3 March 2022 (2022-03-03) * abstract * * paragraphs [0018] – [0027]; figures 1-3 * | 1-11 | |
| A | US 2021/239826 A1 (TERTINEK STEFAN [AT]) 5 August 2021 (2021-08-05) * abstract * * paragraphs [0052] – [0054]; figures 1,2 * | 1-11 | |

TECHNICAL FIELDS SEARCHED (IPC)

G01S
H04W

The present search report has been drawn up for all claims

| Place of search | Date of completion of the search | Examiner |
|---|---|---|
| Munich | 20 October 2023 | van Norel, Jan |

EPO FORM 1503 03.82 (P04C01)

## ANNEX TO THE EUROPEAN SEARCH REPORT
## ON EUROPEAN PATENT APPLICATION NO.

EP 23 17 3721

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2023

| Patent document cited in search report | | Publication date | Patent family member(s) | | Publication date |
|---|---|---|---|---|---|
| US 11184048 | B2 | 23-11-2021 | EP | 3751303 A1 | 16-12-2020 |
| | | | US | 2020395978 A1 | 17-12-2020 |
| US 2022066019 | A1 | 03-03-2022 | EP | 3998496 A1 | 18-05-2022 |
| | | | US | 2022066019 A1 | 03-03-2022 |
| US 2021239826 | A1 | 05-08-2021 | CN | 113204016 A | 03-08-2021 |
| | | | EP | 3859384 A1 | 04-08-2021 |
| | | | US | 2021239826 A1 | 05-08-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11184048 B2